# EUROPEAN PATENT SPECIFICATION

(11) **EP 2 618 654 B1**
(45) Date of publication and mention of the grant of the patent: **02.09.2015**
(21) Application number: 11776607.1
(22) Date of filing: 21.09.2011
(51) Int. Cl.: A01K 5/00, A01K 13/00, A01L 9/00, A01L 5/00

(54) **A SOLE FOR A FOOT OF AN ANIMAL**
SOHLE FÜR EINEN TIERFUSS
SEMELLE POUR LE PIED D'UN ANIMAL

(30) Priority: 23.09.2010 NO 20101327
(43) Date of publication of application: 31.07.2013
(73) Proprietor: Equine Fusion AS, 4042 Hafrsfjord (NO)
(72) Inventor: REVHEIM, Sven, N-4042 Hafrsfjord (NO); AZFOR, Ali, N-4054 Tjelta (NO)
(74) Representative: Onsagers AS
(86) International application number: PCT/NO2011/000266
(87) International publication number: WO 2012/039627

(56) References cited:
- WO-A1-2010/053379
- FR-A1- 2 554 320
- FR-A2- 2 216 911
- US-A- 6 056 062
- US-A1- 2005 166 556
- US-A1- 2007 044 734
- US-A1- 2011 041 780

## Description

### Introduction

The present invention relates to a sole for use on the foot of an animal. More precisely, the invention comprises a sole that has been developed so that during use it maintains a stable and unchanged position between the foot and the sole independent of the surface, and independent of whether the foot is loaded during the down step or unloaded during the up step. The sole has damping and energy control of forces caused by internal and external influencing factors, i.e., the foot of the animal and the surface on which the sole is used, respectively.

The sole in an embodiment with an upper part will constitute a complete shoe which has many advantages over the prior art. For example, it has greater use and training flexibility such that it gives optimal properties during targeted training, it helps to reduce injuries, it provides cost savings, and it is further suitable for use in new areas such as for medical use.

### Background of the invention

Different utility animals have at times a need to protect their feet by using socks or shoes. Larger animals as, for instance, a hoofed animal, and in particular a horse, usually use horseshoes of iron. Such shoes do not, however, maintain the important bio-mechanical function that the hooves of a horse have.

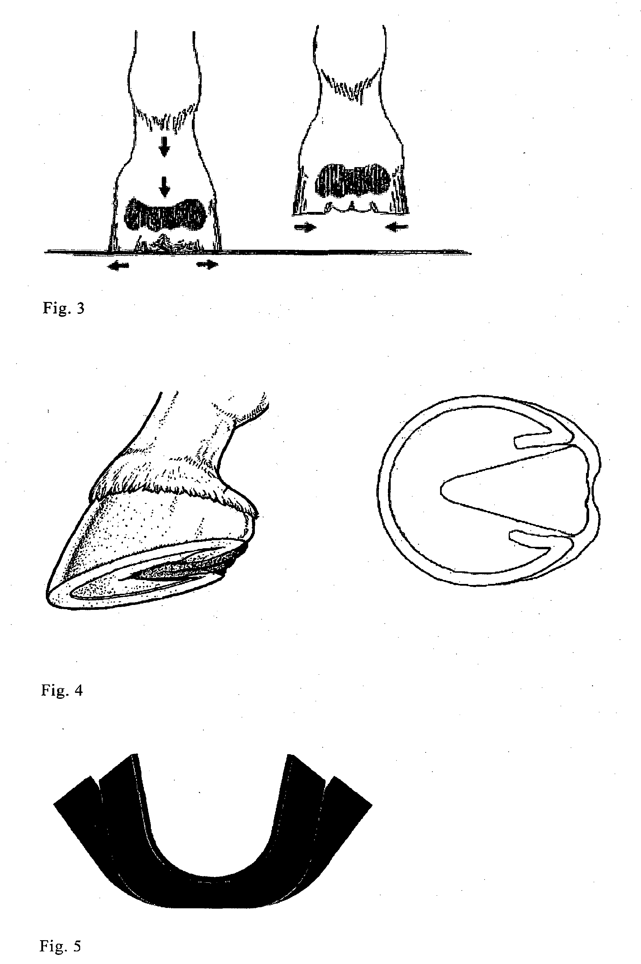

A horse is often referred to as an animal with five hearts, and this is because the hooves constitute a major part of the circulatory system for pumping blood around the animal's body. The hooves expand when the horse steps down and contract when the horse removes weight from the hoof as shown in Figure 3. It is this that is the biomechanical function, where changes in mechanical impact on the down step and the up step directly strengthen and contribute to the horse's blood circulation.

The hoof is therefore an extremely important organ for the horse's survival and it has a great capacity for self-repair. Only the kidneys and the liver have equally important functions in the horse's body. All regeneration of tissue, horn and other structures of the hoof are completely dependent on a constant supply of nourishment via the flow of blood through the hoof for this process to function optimally.

A horse is genetically created without the use of man-made shoes. Nature has made the hoof such that it maintains correct ergonometry according to the type of surface on which it is used. A hoof is exposed to natural wear during use, and will grow and take shape according to the type of use. A change in the natural shape of a hoof will have an unknown impact and an effect on the hoof and the parts directly or indirectly affected by a change from the natural development that normally takes place.

The use of shoes for horses is generally associated with iron shoes that are fixed to the hoof with nails or rivets. This is an old method that has been controversial since this method inhibits and places restrictions on the natural growth and shape of the hoof.

As mentioned above, the hooves have a major effect on the blood circulation, and thus the general condition of a horse. A hoof grows constantly and a rigid form such as an iron shoe inhibits growth of new hoof tissue. The hoof does not acquire its natural shape according to the horse's own movement and wear of the hoof. Iron shoes give little or no shock absorption, such that the use of iron shoes will often result in damage to the tendons and muscles of the horse. Furthermore, the horse's hoof is prevented from expanding, such that iron shoes will not allow the said pumping function in the hoof. Iron shoes also pose risks because the horse may sustain a nail prick. That means to say that the horse has the nail in the shoe driven in incorrectly so that the nail penetrates into the corium which is enervated. Alternatively, the horse may end up with nail bind, which means to say that the nail presses on the nerves. These conditions result in the horse becoming lame until the nail has been removed and the injury has healed.

Mounting horseshoes is also a time-consuming process. An iron shoe is heavy on the hoof, which means that a horse using such a shoe will normally lift his leg higher than necessary and thus use muscles in a slightly different way than in if had not been wearing shoes. The horseshoe is not the result of scientific developments which take into account the good of the horse. Rather it is an old solution that causes more problems than it solves. Furthermore, horseshoes are unsuitable for use on hard smooth surfaces such as asphalt.

From a safety point of view, a traditional horseshoe is also associated with a risk for both horse and rider when used on, for example, a hard flat surface such as rock or asphalt, since the horseshoe may easily slide on such a surface.

A hoof which is shod for years loses its original shape, function and sensitivity. The hoof becomes soft and tolerates less than the hooves of barefoot horses which are not shod with iron shoes. Barefoot horses, on the other hand, develop a natural hoof mechanism, the hooves tolerate more and the hardness in the hooves becomes stronger than in the case of horses that use iron shoes. The hoof wall grows down from the coronet band (the hair line) at an average rate of 7 mm per month. When the shoes are removed, the horse has better circulation in the hoof. The corium, which is a spongy, vascularised layer, allows the horn substance to receive more nutrients and begin to produce a high-quality hoof wall, frog and hoof sole. See Figure 4. After about one and a half years, the whole hoof will be made of this quality horn, and the hoof will be worn and shaped in accordance with the natural movement that each individual horse has.

Just a few years ago there was no question of taking the iron shoes off a competition horse. Most people knew little of what would happen. Today there are barefoot horses that go unshod in all disciplines and events. For many years, the vast majority have experienced a difficult transitional period after shoes were removed. An unpredictable period both as regards time and soreness became a bar to many who were considering switching to barefoot horses. With more insight into trimming and with the use of new lighter horseshoes of plastic, virtually all horses can return to work or training after the iron shoes have been taken off.

Attempts have also been made to make horseshoes which for a horse would feel almost like being barefoot. These are generally light horseshoes made of aluminium and carbide, and where there is a Teflon sole that is adapted and glued to the underside of the hoof. This will mean that the expansion function of the hoof will work satisfactorily inasmuch as the underside of the Teflon sole will slide against the top of the horseshoe. However, this is a demanding mounting process that is difficult to accomplish in a satisfactory manner.

The transition from shod horse to barefoot horse may be time-consuming since the horse will regain sensitivity in the hoof, and have a soft hoof quality, which leads to the horse becoming footsore and lame, especially during riding on gravel and asphalt.

Several players are in this connection using new products that have come onto the market, such as shoes that can be put on for riding and be taken off when riding is over. These shoes are often made of rubber/plastic in a rigid form and they have an adjusting mechanism for screws or the like for fastening the shoe to the hoof. Recently, several types of shoes of plastic or rubber have been developed that are slipped onto the hoof and are fastened using different methods. This new type of rubber or plastic shoe is much used in distance riding and during rehabilitation of hooves. They are also used if a barefoot horse is going to be ridden on coarse gravel or sharp stones which may be painful when the horse begins to regain feeling and function in the hoof.

One of the disadvantages of the new plastic-rubber shoes is that they depend on the horse stepping sufficiently into them, or that the person who puts them on uses enough force to press the foot into them.

Figures 1 and 2, which are taken from US D440,363S and US-2005166556, respectively, illustrate this. Persons who are to put on such shoes are placed in a difficult situation which will take undue time and give a risk of injury to persons putting on the shoes.

When a shoe is pressed over a hoof, many horses will become uneasy and restless, which may result in a risk for the person shoeing the horse, especially as when the person is bent over the hoof, he is in an exposed position and may easily be kicked by the horse. The said shoes are made of a material that is drawn together over the hoof and expands when the tightening mechanism is loosened. Since the hoof is slipped into the shoe and since the shoe also tries to expand, the shoes easily fall off during use.

A hoof moves a great deal during riding and there will be much wear of both hoof and shoe as the hoof slides within the shoe. The actual sole of the shoe and the hoof will suffer from friction wear. Furthermore, it is the case that when the shoe is fastened around the upper part of the hoof by means of screws, steel wire or similar fastening means, the shoe might easily fall off during riding and parts may be lost whilst the shoe may be destroyed.

Shoes are exposed to substantial forces as a horse moves. If the shoe falls off, this could cause safety problems, as the horse may stumble on the shoe, turn its ankle or fall, the rider may fall off and horse and rider may thus incur serious injuries. This is a serious safety problem for both horse and rider. The chance of screws loosening and shoes falling off and resulting in serious injury in connection with a fall or turning an ankle is significant with today's fastening means, mounting and removal.

Furthermore, with today's shoes it cannot be seen how the hoof is placed inside the shoe, and thus whether the shoe is adequately adapted to the hoof. It is not possible to tell if the shoe pinches or is ill-fitting for the horse. The shoe is made in a rigid form which means that the horse's natural expansion and contraction of the hoof is not provided for. Since a hoof seeks to expand during the down step, a hard plastic material without elastic properties or which does not yield mechanically to impact will not give the hoof much better support that iron shoes.

Shoeing a horse should ideally be a matter of following the horse's own anatomy and making it as comfortable as possible for the horse when shoes are used. Furthermore, shoeing a horse should take into account the horse's anatomical function, and its natural hoof movement, which provides a bio-mechanical function, should be disturbed as little as possible. A hoof has sensitive parts, and shoes made in a rigid form create a problem in particular across the horse's heel.

Shoes that are used today do not take into account the horse's heel in either form or function. Attempts have also been made to relieve the pressure from the shoe on the heel, for example, by means of an alternative tightening mechanism or the like, and the hoof is thus exposed to the same pressure on its sensitive parts as on the actual hoof wall which tolerates this pressure. The horse is thus exposed to an unnatural pressure on the heel and on the soft skin that runs from the foot down to the hoof. This can cause discomfort like that experienced by people when wearing shoes that are too small. Today, shoes for use on a horse do not have any form of impact or shock absorption system to deal with the enormous stresses to tendons and joints incurred by a horse during demanding riding such as show jumping and the like. In show jumping where a horse lands on its front legs with its own weight as well as that of the rider, the horse will be subjected to a great deal of wear.

Shoes for hoofed animals of a closed type, as in the prior art, do not take into account that heat and sweat will be generated in the shoe, and this will be a problem in particular when the animal is active. Sweat might in turn lead to irritation of the skin and consequential soreness, tenderness and blisters, which is aggravated by frictional forces since the foot is not completely stationary inside a shoe of known type.

Many people are injured each year in connection with riding, care and shoeing of hoofed animals. Hoofed animals and in particular horses might become restless if shoeing them takes an unduly long time and requires much holding of feet/hooves. This will generally be difficult for the animal and for the person performing the shoeing. Since it is not unusual for the person shoeing an animal to be subjected to accidents during shoeing, it would be desirable that work in connection with shoeing is quick, simple and not least safe.

It is also a fact that riders may be subjected to danger as a result of a horseshoe being incorrectly mounted or that the shoe is not adequately secured/fastened and therefore falls off during riding. It is therefore desirable that mounting of shoes on hoofed animals can be done is a more reliable and more efficient way, and that the shoe per se feels natural to the animal that is to use it.

The object of the present invention is to solve the aforementioned problems by means of a sole that, inter alia, maintains a stable and unchanged position between the foot and the sole independent of the surface, and independent of whether the foot is loaded, and furthermore where the sole maintains the natural bio-mechanical hoof function.

The inventive sole can, together with an upper part, constitute a shoe that is made very light so that in use it will not inhibit the animal's natural movements. Furthermore, it has properties that make it useful for all types of use and surface.

The sole is well suited for medical use such as rehabilitation of worn and/or inflamed hooves. It is also suitable for use as protection in order to prevent wear and diseases in hooves by using the soles when a horse is in places where it is especially exposed.

The sole will in an embodiment with an upper part constitute a complete shoe which has many advantages over the prior art. For example, it has greater use and training flexibility such that it gives optimal properties for targeted training, it helps to reduce injuries, it provides cost savings and it is further suitable for use in new areas as, for instance, for medical use.

The shoe will be able to recreate natural and optimal conditions by simulating the surface on which the shoe is to be used, for example, by simulating a dirt or grass surface which is optimal for a horse to move on. This is done by incorporating different properties into the sole, such as damping, friction, chemical, physical and bio-mechanical properties etc. Different conditions on all types of surfaces such as asphalt, chippings, gravel, ice and snow can thus be simulated by using the present invention. This results in great flexibility in use and training areas and savings in the form of injury reduction, transport costs, and the costs of infrastructure, which are high when using today's technology.

The sole may further be made in such a way that surfaces which are optimal for training and the like are built into the sole, thereby giving a horse optimal training conditions. This can be done in that sole softness etc. is made so as to ensure, for example, that it is heavier to run, but which at the same time gives good damping, thereby preventing injuries and ensuring comfort for the horse.

### Brief description of the invention

The object of the present invention is to provide a sole for the foot of an animal, the sole being constructed such that during use it maintains a stable and unchanged position between the foot and the sole independent of the surface and independent of whether the foot is loaded during the down step or unloaded during the up step, and furthermore where the sole, when in use, forms a natural and dynamic bio-mechanical anatomical chamber which takes up frictional forces that arise between sole and foot in a self-adjusting manner in relation to the forces which are applied. The sole has damping and energy control of forces caused by internal and external influencing factors, i.e., the foot of the animal and the surface on which the sole is used, respectively.

The invention is characterised in that firstly the sole is made of an elastic material with a surface that is adapted to the foot imprint, and with a hardness that is adapted to the load to which the sole is subjected during the down step, and where the hardness is such that the animal's leg partly sinks into the top surface of the sole during both the down step and the up step, and wherein secondly the sole is biased in relation to its top surface by a force which causes at least the toe part and the heel part to be biased upwards and towards each other, such that the sole firmly surrounds the foot also when it is unloaded during the up step, and where this helps to maintain the frictional forces between the foot and the sole at all times.

The sole will in an embodiment with an upper part constitute a complete shoe which has many advantages over the prior art. For example, it has greater use and training flexibility such that it provides optimal properties for targeted training, it helps to reduce injuries, it provides cost savings, and it is further suitable for use in new areas as, for instance, medical use.

Further aspects of the invention are defined in the dependent claims included in the set of claims.

### Brief description of the figures

The invention will be described in more detail below with reference to the attached figures, wherein:
Figure1 shows the prior art from US D440,363 S;
Figure2 shows the prior art from US-20050166556;
Figure 3 shows the natural mechanism for blood circulation in a hoof during movement of the hoof;
Figure 4 shows a hoof and the underside of a hoof with shock absorbing parts, and the sensitive parts of the heel (the frog);
Figure 5 shows an elastic material as a starting point for a sole;
Figure 6 shows a sole with a surface that is adapted to the imprint of the foot on which it is to be used;
Figure 7 illustrates forces that act on a sole;
Figure 8 illustrates the rear part of the sole that is drawn up owing to the spring effect of the sole;
Figure 9 illustrates compression moulding of a sole;
Figure 10 illustrates injection moulding of a sole;
Figure 11 shows a layered construction for a sole;
Figures 12A-C show examples of the implementation of different damping properties;
Figure 13 shows a sole and upper part moulded in one piece;
Figure 14 shows a sole and an upper part which are constituted of at least two different parts;
Figure 15 shows an upper part with bent sole for easy mounting on a foot;
Figure 16 shows a sole with ventilating holes;
Figure 17 shows spikes or studs under the sole;
Figure 18 shows the locking function of the tightening mechanism;
Figure 19 shows the attachment part for rings, and the release cord therein;
Figure 20 shows which forces act on a sole during use, and
Figure 21 illustrates the properties of a sole according to the invention when it is in use.

### Detailed description

In what follows the present invention will be described in detail with reference to the attached figures. Where the terms sole, horse, hoof, horse's hoof, horseshoe or other references to the invention are limited to comprise a sole device for a horse, it should be understood that the term horse is merely used as an example to increase the ease of understanding the invention. The invention and its basic ideas can also be used for other ungulates such as donkeys, mules and camels, and moreover for other animals that do not have hooves but paws.

In the sport of trotting, horses today have an average age of about six years, whilst for horses used for leisure riding the average age is about 15 years. The actual biological age of a horse is about 30-35 years. The reason for the low duration of life is mainly injuries related to hooves and the associated joints. The present invention is capable of simulating the horse's natural bio-mechanical movements and type of surface. This will reduce the scope of injury and improve the horse's health. The scope of injury for horse and rider will be substantially reduced, thereby cutting costs. The effect of this will in turn be a reduction in horse transport costs. This is also positive for the environment considering there are 65 million horses in the world.

The invention can in its design be used as a medical shoe where medicines are administered to the hoof, for example, creams and the like. The shoe's function may also be to shut out chemical contaminants and protect against external loads. This will result in a faster healing process and less medical supervision and medication. Medical expenses are thus reduced.

The invention will also reduce the effect of chemical and mechanical stresses such as a stable box, during transport or the like and thus reduce injuries, infections and the like in the hoof. The shoe's friction against the surface also ensures better transport such as on a loading ramp and other smooth surfaces.

The invention furthermore gives greater use and training flexibility for horse and rider because the same shoe can be used to ride on all surfaces. This extends the use and horses can be trained in an entirely new way by extending the type of training, use and recreational areas in which the training takes place. This results in less transport of horses to rideable areas and the like. The horse has more varied training conditions, which results in better musculature development and flexibility thereof. Areas that earlier were unsuitable then become suitable areas for training. This will help to increase the breadth of the sport through reduced costs for special tracks and paths.

The building of training-specific infrastructure such as training tracks is reduced because it is not necessary to build a separate infrastructure. This helps to cut, inter alia, transport costs.

Costs will also be reduced in that there is no need for farriers and the use of iron shoes. The invention will reduce medical expenses arising from injuries to rider and horse, and the invention will result in an increase in the lifetime of a horse.

The invention may further be used during stabling such that savings are made on litter used to make it softer for the horse to stand stabled. The use of the horse could be increased in relation to investments because the invention will provide more possibilities and length of usage and riding in relation to today's technology.

As will be appreciated, the present invention will have many functions that will be capable of giving substantial savings.

The core of the present invention relates to a sole for use on an animal as, for example, horses. In designing the sole, one of the objects is to have minimum inhibition of the animal's natural hoof movement and function. The sole is based on anatomical and comfort requirements for the animal so that the hoof and its function are taken care of in the best way possible.

As mentioned above, the hoof is an important part for pumping blood around the animal's body. The hoof expands when the horse steps down and contracts when the horse removes weight from the hoof, see Figure 3. Such an expansion and contraction of the hoof is used as a blood pump for a hoofed animal. To allow this function to work, it is important that what is put on the horse's hoof inhibits as little as possible the natural processes in the hoof, such as the pumping process. This is accomplished by taking into account the animal's own hoof structure and hoof function. A hoof is built up of a combination of flexible, elastic and rigid parts in order to achieve correct movement and stability in the stride.

The present invention is characterised in that the risk of personal injury and injury to the horse are minimised by using the inventive sole that has been developed with a view to maximum comfort and natural adaptation to the horse.

This is achieved by means a sole for the foot of an animal, where the sole is constructed such that during use it maintains a stable and unchanged position between the foot and the sole independent of the surface, and independent of whether the foot is loaded during the down step or unloaded during the up step, and further where the sole, when in use, forms a natural and dynamic bio-mechanical anatomical chamber that takes up frictional forces which arise between sole and foot in a self-adjusting manner in relation to the forces that are applied.. The sole acts as energy control of forces which act on it.

To achieve this, the sole is made of an elastic material with a surface that is adapted to an imprint of the foot.

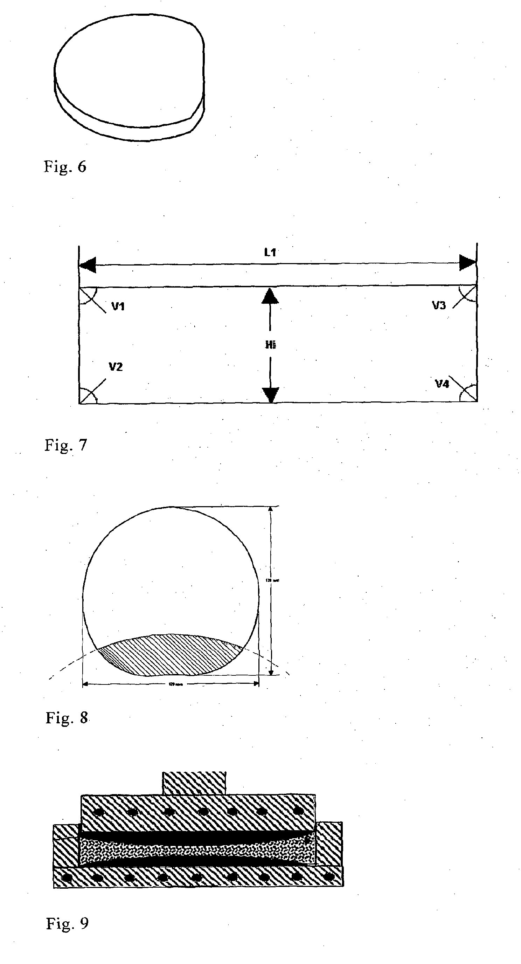

Figure 5 illustrates an elastic material with a varying degree of flexure which is the starting point for a sole according to the invention, whilst Figure 6 shows the sole which has a surface adapted to an imprint of the foot, which in this case is the hoof of a horse.

The sole is further made with a hardness that is adapted to the load to which it is subjected during the down step, and where the hardness is such that the animal's leg sinks into the top surface during both the down step and the up step.

Thus, the sole per se will act as a resilient material which adapts its shape to the hoof's expansion and contraction during use. The hoof and the sole will therefore together function and be seen as a single physical unit, which also the animal using the sole will feel is extremely natural. The area and thickness of the sole will be altered during use when compressive forces and frictional forces act on it. During the down step the area will increase whereas the thickness will decrease, whilst the opposite will happen during the up step. The volume will be constant.

As the impact force on the sole increases so will the friction between the hoof and the sole, such that a stable and unchanged position is maintained.

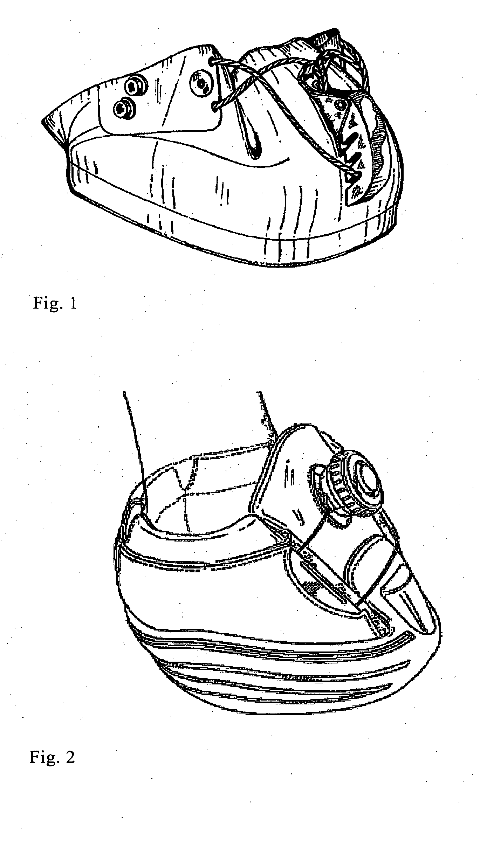

In the prior art as shown in Figures 1 and 2 this is the opposite. What happens there is that when the impact force on the sole increases, the hoof will slip on the sole, and the tightening mechanism in the upper part of the shoe must take up all the forces that arise. This will in turn mean that the upper part of the sole must be made robust in order to be able to handle the substantial forces that arise during use. A shoe of this kind will therefore be both large and heavy.

Figure 7 illustrates simply the difference in functional principle of a rigid sole and a flexible sole. In the case of a rigid sole, L1 and Hi will have constant values during use, whilst these values will change dynamically during use of a flexible sole. For the rigid sole, as mentioned, most of the forces that arise will therefore have to be taken up by the upper part of a shoe, and not by the sole itself, which also results in substantial wear on the sole, since the hoof expands and contracts during use. Internal acceleration in a horse's shoe not only results in wear under the hoof, but may also lead to wear on the side and upper parts of the hoof, and impact injuries, for example, to the frog at the heel.

The load to which a sole is subjected is directly related to the weight of the animal on which the sole is to be used. By using an elastic sole, it will be possible for the sole itself to collect energy and absorb it. An elastic sole typically comprises rubber. A definition of hardness is the resistance that a material has to permanent indentation. This may, for example, be measured using a durometer which is well suited for determining the elasticity of materials such as rubber. Elasticity is often expressed as a Shore number.

As will be appreciated, the thickness that a sole according to the invention may have will vary depending on the animal that is to use the sole, since size, weight, type of use etc. will vary. It has been found that for a typical horse, a sole thickness of 4 mm to 7 mm and rubber with a Shore number of about 45-80 will be favourable.

The sole according to the invention is further pre-tensioned in relation to its top surface with a force which causes at least the toe part and the heel part to be biased upwards and towards each other. Since the toe part of a hoof is hard, whilst the heel part has large sensitive areas, the heel part will primarily be pulled/bent up as shown by the hatched area in Figure 8.

The fact that the animal's legs partly sink into the top surface of the sole during both the down step and the up step and that in addition, as mentioned, it is biased will help the sole to surround the foot even when it is unloaded during the up step, and this helps to maintain frictional forces between the foot and the sole at all times in that the underside of the foot, which in the present example is the hoof, will always have direct frictional contact with the sole.

The sole may be biased in different ways. In one embodiment, it is properties of the sole itself that cause it to be biased. As mentioned, a rubber blend with the desired properties is highly suitable as material for making a sole according to the invention. This will give a sole with good elasticity and stability, damping and stability in push-off and landing. This is the case since such a design will distribute the energy more naturally. The sole will therefore function as an energy control of forces acting on it.

By moulding a sole with different thickness in its different portions such as the heel portion, middle portion and toe portion, different flexibility can be obtained in these parts relative to each other, and furthermore that different portions of the sole are biased in relation to each other, such as the toe part and heel part. The moulding process may, for example, be compression moulding as illustrated in Figure 9.

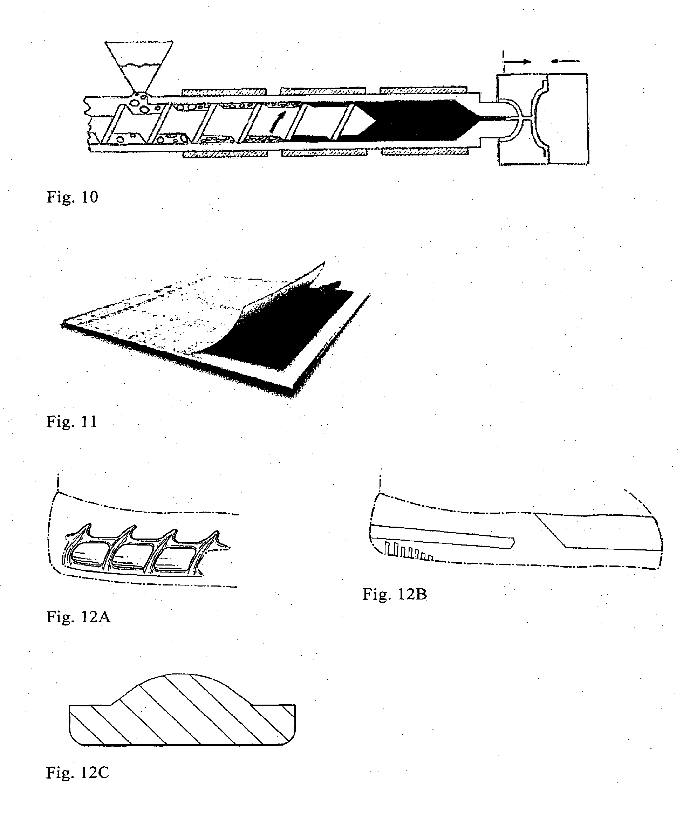

Another alternative is injection moulding as illustrated in Figure 10, or a combination of the two said processes.

The feature that the top surface of the sole is such that its mechanical properties give this part greater contracting force than its underside, there thus being formed a spring effect which pulls at least the toe part and heel part upwards and towards each other can, as mentioned, be obtained through a suitable production process.

Similar properties may also be obtained by making the sole as a layered construction having at least two layers

Figure 11 shows an example of this where parts of the construction have been drawn apart to illustrate several layers that may have different properties.

For example, the sole may comprise segments as layers in a sandwich construction with one or more intermediate reinforcing layers which, for example, are made in one of the materials: aramide fibre, carbon fibre, elastomers, glass fibre or metal netting. There may also be other materials.

Differences in material properties may be obtained, for example, by applying composite materials with the reinforcing fibres arranged as parallel fibres, or weaves or textiles with the fibres intersecting each other at different angles and in different numbers of layers in different parts and/or by using different types of textiles and weaves in different areas, such that correct material properties are obtained. The sole construction according to the present invention will lead to an improvement in the animal's comfort and hoof function in that the shoe moves and is naturally yielding in relation to the hoof movement and surface in a natural manner.

Inasmuch as the sole may be composed of several layers and/or parts and/or that it has different material properties in different parts of the sole in order to ensure that it is yielding to the natural expansion of the hoof as it hits the ground, and in that it contracts again once the weight has been removed, the sole will be more flexible in relation to the hoof size, thereby avoiding pressure across the hoof. The horse will also to a greater extent feel the surface and a faster transition from shod to barefoot horse will be obtained as the horse becomes accustomed to normal hoof function.

The connecting mechanisms that act between the sole segments may be of the type where the pieces are snapped together, or the sole segments may be interconnected by means of a material which has a great degree of flexibility in relation to the rest of the sole. Connection between segments may also be obtained by using adhesive, such as adhesive based on flexible silicone, composite. It may also consist of buckles, hook-and-loop fasteners, snap connections, screw connections etc. The sole must not be so flexible that it collapses. At the same time, its rigidity must not be so great that the animal's natural hoof movements are inhibited. The sole may have different rigidity and flexibility, and may comprise more or fewer flexible and/or rigid zones which help to optimise the weight distribution and ability to move. Shocks and impacts will be capable of being taken up and distributed in a better way in that the shoe is yielding to the down step.

The sole in an embodiment according to the present invention may have a sole construction which does not allow liquid to penetrate into the shoe. Furthermore, it may have a breathing textile in its sides whilst the textile is wholly or partly water-repellent from the outside.

In a multilayered construction, the bottom layer may be a wear layer that is adapted to the surface on which the sole is to be used. The layer above may be a strengthened reinforcing layer, and the layer above the last-mentioned may be an energy-controlling layer. By this is meant a layer that can take up and damp impact loads. Different examples of this are shown in Figures 12A-C, where A shows a sole with a damping property in the heel; B shows a sole with different zones for different properties in a vertical position, whilst C shows a sole that may have different suitable shapes such as built-in concavity (for use on a flat surface).

In an embodiment of the invention, the sole may further comprise an upper part, such that the sole together with the upper part forms a complete shoe.

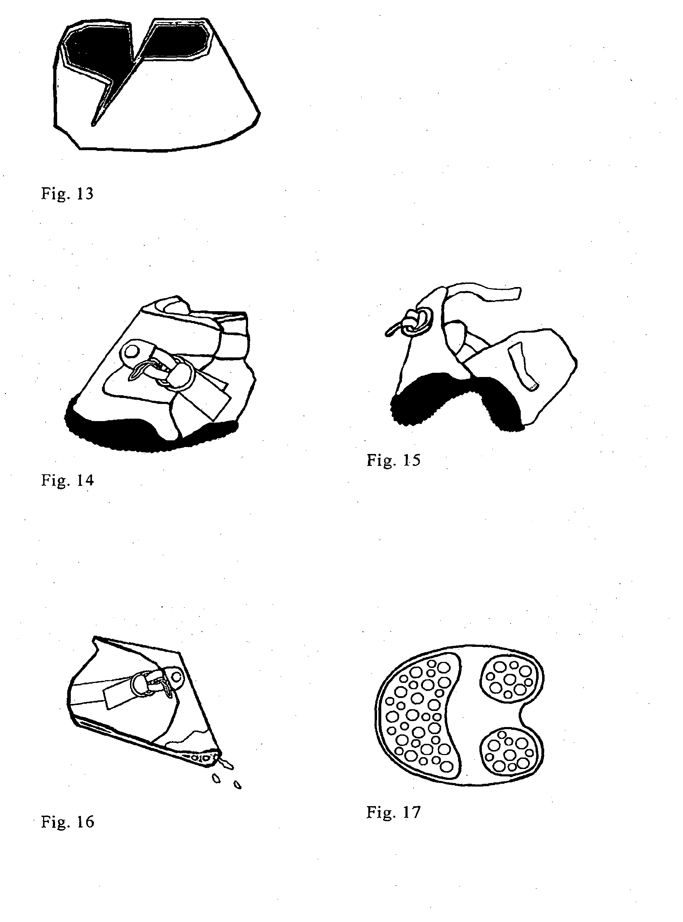

The sole and its upper part may be moulded in one piece of a flexible material, as shown in Figure 13.

The whole shoe may then be of a flexible material which is configured with different thicknesses in different parts in order to obtain at least a pretensioning between toe part and heel part, but also extensibility in the upper part for mounting and removing such a shoe.

In another embodiment, the shoe can be provided in that the sole and its upper part are constituted of at least two different parts made of different materials. An example of this is shown in Figure 14.

The sole itself may be made of a rubber material, whilst the upper part may be a suitable material as, for instance, leather, GOR-TEX^{®}, polyester, cotton textile, padded textile or a combination of at least two of these. There may also be other suitable materials.

The sole's upper part is preferably equipped with slits in its respective sides which extend from an upper edge of the upper part and basically vertically downwards towards the top surface of the sole, as shown in Figures 13 and 15.

Such slits will contribute to easy mounting in that the toe part and heel part of the sole can be bent apart during mounting on a foot, ref. Figure 15. Being able to bend the sole since it is flexible will make it simple, safe and quick to mount, remove and fit to the hoof of, for example, a horse. Fitting to the hoof, mounting and removal can be done without the use of tools or extra parts such as screws, screw driver or other loose parts or equipment.

The sole and its upper part may also comprise a ventilation system which allows adaptation according to weather conditions in that there is an opening and closing mechanism for exposing air vents in the shoe, ref. Figure 16. If there is much water on the surface, the air vents can be closed. The ventilation system may further comprise in combination with said air vents or alone a system in which the whole shoe or parts of the shoe are breathing such that moisture can be transported out whilst moisture does not seep in. The sole itself may also be provided with a plurality of small holes, which are sufficiently large to allow moisture out, across the sole and the holes may have a membrane which has breathing properties but which will not allow moisture into the shoe. The sole should further be of a material which wholly or partly prevents sharp objects from penetrating into the sole and thus injuring the animal's hoof. A sole with a ventilation system as indicated will ensure optimal comfort for the animal wearing the sole, whilst providing protection against sharp objects and the like.

A sole according to the present invention may comprise one or more additional components essentially placed on the sole of the shoe.

These components may be an integral part of the sole. Alternatively, the components can be placed inside the shoe (which is constituted of the sole with upper part) in such a way that they lie as a sole over the permanent sole which is the basis for the shoe. Once the shoe has been mounted, the hoof will then strike against the additional components as the hoof steps down. A further alternative may be that the sole has a pocket mounted on its top surface, which pocket may be adapted to the position of one or more of the additional components. The additional components may be gathered in a bag or put in the pocket singly. The components may be different forms of additional equipment in the sense that it is conceivable to have several sets of additional components with special properties so that a specific damping function can be tailored to the hoofed animal according to need, and where the additional components are easily replaceable as indicated above. The solution where the additional components are placed in a bag may conceivably be adapted for a hook-and-loop fastening to the existing sole of the shoe.

The heel portion of the sole may consist of flexible heel parts and a hard casing that is not in conflict with the heel. The shoe takes care of the natural hoof function in that different materials are joined together in layers or of sheets which consist of several materials that are hardened or moulded in a mould, fixed mechanically or in some other way fastened together in order to obtain the desired function.

The sole may further be equipped with one or more shock-absorbing means which may consist of air, liquid, elastomers, metals, different types of gel or springs or other material that is suitable and mechanically adjustable.

No matter which of these is used, the purpose is to obtain a damping effect.

It is well known that very costly race horses are trained on special, patented tracks with especially composed surfaces which have the purpose of training specific muscle groups, whilst giving a horse heavy loading and high pulse even at low speeds. This is achieved by how the surface responds to the impact force of the hoof. Such surfaces are very costly, and therefore only a few horses get to use them.

One of the objects of the present invention is to be able to obtain a similar effect by using a sole for training purposes.

The sole can be made in such a way that surfaces which are optimal for training and the like are built into the sole, thereby giving a horse optimal training conditions. This can be done in that the sole softness etc. is made so as to ensure, for example, that it is heavier to run, but which at the same time gives good damping, thereby preventing injuries and ensuring the horse's comfort.

By making the sole with an integral damping effect by incorporating one or more shock absorbing layers or means, different types of surface can be simulated, which will be very favourable for training horses for a special type of use, such as, for example, for trotting races. This will mean that more people will have the opportunity to train a horse in a way similar to that which only a few can afford today.

The sole segments and the other modules forming the whole shoe can be produced in plastic, carbon fibre, glass fibre or other suitable materials and combinations thereof, where these materials can be selected having in mind that the shoe should be of light weight, flexible, comfortable and that it should as far as possible be ventilating so as to avoid unnecessary heat generation. The shoe may be perforated and of a material quality that facilitates maintenance. The shoe may, for example, be made of a material such that it tolerates some heat and chemicals in connection with cleaning.

In one embodiment, the sole is made having one modular system for adaptation to the surface where parts may be removed or added, such as a whole sheath or whole sheets under or on the side of the sole for adapting the sole to surfaces or desired damping. The modular composition of the sole ensures that parts can be put on or removed by means of, for example, a rapid-action coupling such that it is quick, safe and easy. This also makes it possible to alter the surface function of the shoe according to weather and surface conditions and according to usage. In especially difficult conditions, modules may be used with, for example, spikes or studs in the sole part or parts of the shoe. An example of this is shown in Figure 17.

As shown in said Figures 14 to 16, the sole's upper part preferably further comprises a tightening mechanism for tightening the parts on either side of the said slits towards each other such that the upper part surrounds the foot on which the sole is mounted. This will contribute directly to an increase in pretensioning and stability between the sole and foot. The shoe will therefore sit firmly on the foot on which it is mounted without rotating or becoming displaced during use.

The said tightening mechanism may comprise known devices such as tapes with hook-and-loop fasteners, buckles or elastic bands.

In a preferred embodiment, however, the tightening mechanism on the sole's upper part comprises an elongate belt-shaped part which at one end thereof is fastened to a heel part of the sole. At the other end thereof it is passed through two flat-lying and essentially circular hoops or locking rings which function as a lock for the belt-shaped part. The locking rings are in turn attached to an upper and forward part of the upper part of the sole. One of the locking rings further comprises a release cord at the end of which that is closest to the attachment to said upper part of the sole, such that the lock is opened by pulling on the release cord.

More specifically, the tightening mechanism comprises a first elongate fastening strap with a split in its first end, the split being almost parallel to the side edges of the fastening strap, where the split provides a first and second tab which are almost symmetrical about the split axis, the end edge of first tab being folded backwards some way along the first tab and over a part of the end of the upper and lower hoop thereby forming a first loop which surrounds a part of the upper and lower hoop, and where the end edge of the second tab is folded backwards almost as far as the first tab is over a part of the upper and lower hoop such that a second loop is formed which surrounds a part of the upper and lower hoop, where the upper and lower hoops are fastened to the first elongate fastening strap via the first and second loop which are identical such that the hoops can be rotated about an axis of rotation coincident with the longitudinal direction of the two loops transverse to the longitudinal direction of the first elongate fastening strap. In the split between the first and second tab, the said release cord is fastened to the upper hoop, and a second elongate fastening strap which has almost the same width as the first fastening strap, and which at a first free end is adapted for attachment to the upper and lower hoops.

The first elongate fastening strap can in one embodiment be fastened close to the second end by means of a fastener which provides a rotatable attachment where the axis of rotation is perpendicular or almost perpendicular to the flat side of the elongate first fastening strap. This may for example be a pop rivet, presstud or nail, where the attachment is such that the first fastening strap does not become caught against the surface.

The tightening mechanism for tightening the upper/forward part of the upper part of the sole to the lower/rear part of the upper part of the sole may, for example, be characterised in that the second elongate fastening strap is fastened close to the second end by a fastener which provides a rotatable attachment, where the axis of rotation is perpendicular or almost perpendicular to the flat side of the elongate second fastening strap, where the first end of the second elongate fastening strap constitutes the free end of the second elongate fastening strap.

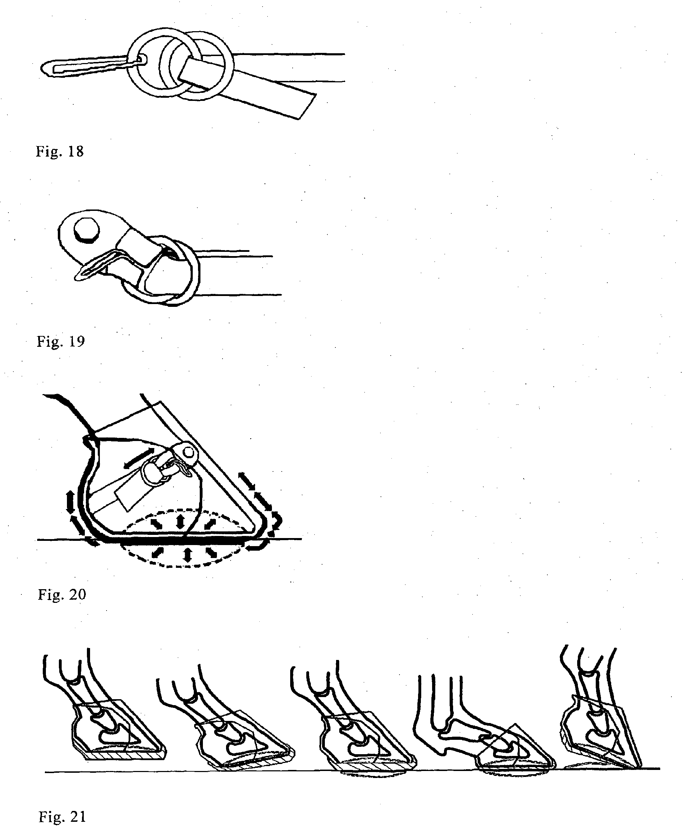

An example of such a tightening mechanism is illustrated in Figures 18 and 19, where Figure 18 shows the elongate belt-shaped part that is passed through the flat-lying rings, and with the release cord mounted on one of the rings. This design contributes to a locking function of the elongate belt-shaped with one self-adjusting point. When the cord is pulled, one of the locking rings is pulled away from the other in order to open the lock in a fast and simple manner.

Figure 19 shows the attachment part for the rings that are to be fastened to the said upper part of the sole. The figure shows how both locking rings are secured by a part which has a slot through which the release cord is threaded. Figure 14 shows an example of where the locking rings are fastened to the upper part. It can, for example, be fastened to the upper part by means of a pop rivet, presstud or nail, where the attachment is such that the first fastening strap does not become caught against the surface.

The area of application of the present invention lies within all normal activity for a horse or another hoofed animal, such as competition riding, ordinary riding, trotting and horse races, hoof rehabilitation, transition from use of shoes to no use of shoes. The sole is easy to fit and take off and on without extra parts or by using tools. It sits firmly in place during use such that the risk of injury to horse and rider that are in motion as a result of problems with shoes is minimal.

The sole which together with the upper part constitutes a shoe according to the present invention is safer during mounting, removal and when in use. It is characterised, inter alia, by its simple and quick mechanism for mounting and removal and in that it does not fall off or become displaced during use. Furthermore, it takes care of the sensitive parts of the hoof in that it is constructed to take into account both the parts of the hoof that are hard as nail and the soft and sensitive parts of the hoof at the heel. In hoofed animal the heel is sensitive to pressure behind the hoof and on the underside, the frog. See Figure 4.

In one embodiment the shoe comprises a soft and flexible full frame encased in a harder shell material to protect the sensitive areas of the hoof in as careful a manner as possible, whilst there is sufficient hardness and strength to achieve stability and to keep the shoe in place.

Figure 20 illustrates how different forces act on the shoe so that it maintains a stable and unchanged position on the foot during use.

As it is the sole that takes up most of the forces during use, the upper part of the sole can be made both light and flexible since this part is subjected to a minimum of forces compared to other types of shoes that are used today. Thus, the horse's use of forces is more natural than with the use of another type of shoe.

The shoe is easy and quick to mount and remove such that undue risk of personal injury during mounting and removal is avoided.

As also shown in Figures 14 and 15, the shoe has an external locking, safety and adjustment mechanism such that the rear piece of the shoe can with the aid of a coupling/joint in the sole be bent. The shoe will in one embodiment be split horizontally along the middle (it can also be split horizontally at other places than the middle), so that the hoof easily slips into and is positioned in the front piece of the sole before the other part, the rear part, is closed over the rear part of the hoof..

This means that the shoe remains sitting properly in place on the hoof because the hoof is closed inside the shoe and not pressed into the shoe. The split solution means that the person mounting the shoe sees how the shoe fits the hoof when it is placed inside the shoe during mounting and removal. The shoe is adjusted fully to the hoof using the external locking, safety and adjusting mechanism with which it is easy to narrow or widen to the right size of the animal's hoof. The adjustment is obtained in that the shoe has flexible parts on either side of the hoof or only on one side of the hoof. Such a splitting of the shoe is obtained by different appropriate forms that are put together. The same properties and qualities may be obtained by using material qualities that are yielding, or by combining the use of yielding/elastic materials and a splitting of the shoe into two or more parts. Different principles for the closing and locking, safety and adjustment mechanism may be based on a lock as is known from, inter alia, alpine skiing boots, cycling shoes or the like and which tolerate the forces to which they will be subjected from a horse or another hoofed animal. The shoe's fit is important for ergonomic function, comfort and safety. The shoe should be capable of being used on animals with different hoof size in that, for example, there are different fixed shoe sizes such that shoes may be selected for the horse according to hoof measurement. Within each individual shoe size there will be degrees of fitting by use of the at least one external locking, safety and adjusting mechanism such that when the hoof grows and is trimmed, it is easy to adjust and fit the shoe accordingly and thus ensure that the shoe cannot fall off.

The different parts of a shoe may, as mentioned, be made of different types of material based on what seems to be suitable. Parts of the shoe may be provided with reinforcements in the form of strengthening means such as steel wire or another suitable material capable of withstanding extra pressure over desired parts of the hoof so that the shoe sits well during use. When a shoe is closed using the tightening and closing mechanism, it will be desirable that the said reinforced parts of the shoe exert sufficient pressure on the rigid/hard non-sensitive parts of the hoof such that the shoe sits well without forgoing free movement for movable parts of the hoof and whilst not sacrificing the animal's comfort. The shoe can also have an internal tightening and locking mechanism in the lower part of the shoe which gives extra tightening as the shoe is closed in that said reinforcement such as the steel wire is drawn into tension when the shoe is closed.

In that the shoe in one embodiment comprises a sole with associated sides of elastic material, an elastic contact face against the area of the hoof that is in contact with the shoe will be obtained during mounting, tightening and release, and thus give the shoe optimal fit as well as the ability to take up forces from the hoof when the hoof contracts and expands.

A major point about the sole according to the present invention is that the sole is flexible and follows the hoof contour and its movement. The sole functions as an energy control of the forces acting on it.

When the sole is used on a hard surface as, for instance, asphalt, it will have a good grip, and at the same time maintain the important bio-mechanical function in the hoof in that the sole follows the hoofs expansion such that the pumping of blood is maintained.

When the sole is used on a soft surface as, for instance, sand as illustrated in Figure 21, it will form a natural foot imprint on the sand which, when the foot goes from the down step to the up step, is a compressed raised part or level ridge, which in turn contributes to good stability and maximum force in the push-off. This is an important effect of the inventive sole when used in, for example, trotting races.

As mentioned, a sole with associated parts in an embodiment will constitute a shoe where the individual parts have specially adapted material properties such that physical design is combined with favourable materials selection in an optimal manner. This can be achieved by flexible junctions between the parts with suitable connecting mechanisms between the parts.

In the above, a number of designs for a shoe for hoofed animals are suggested, and the invention should be understood thus that any possible combination of the said designs can be made within the scope of the invention which is not limited to the feet of hoofed animals.

## Claims

1. A sole for the foot of an animal, wherein the sole is constructed such that during use it maintains a stable and unchanged position between the foot and the sole independent of the surface and independent of whether the foot is loaded during the down step or unloaded during the up step, and further wherein the sole, when in use, forms a natural and dynamic bio-mechanical anatomical chamber which takes up frictional forces that arise between sole and foot in a self-adjusting way in relation to the forces that are applied such that the sole functions as energy control of forces acting on it, and wherein this is made possible in that the sole firstly is made of an elastic material with a surface that is adapted to the foot imprint,
**characterised in that** the sole has a hardness that is adapted to the load to which the sole is subjected during the down step, and wherein the hardness is such that the animal's legs partly sink into the top surface of the sole during both the down step and the up step, and wherein the sole secondly is biased in relation to its top surface with a force which causes at least the toe part and the heel part to be biased upwards and towards each other **in that** its top surface is made such that its mechanical properties give this part greater contracting force than its underside, the sole thereby firmly surrounding the foot also when it is unloaded during the up step, and where this contributes to maintaining frictional forces between the foot and the sole at all times.

2. A sole according to claim 1, **characterised in that** the sole is made of an elastic material which is made having different thicknesses in different portions and whereby a spring effect is generated which draws at least toe part and heel part upwards and towards each other.

3. A sole according to claim 1, **characterised in that** the sole is made in a layered construction having at least two layers.

4. A sole according to claim **1,characterised in that** the sole further comprises an upper part, and where these together form a shoe.

5. A sole according to claim 3, **characterised in that** the sole and its upper part are moulded in one piece of an elastic material.

6. A sole according to claim 3, **characterised in that** the sole and its upper part are constituted of at least two different parts made of different materials.

7. A sole according to claim 4 or 5, **characterised in that** the sole's upper part comprises slits in its respective sides that extend from an upper edge of the upper part and basically vertically down towards the top surface of the sole, and wherein said slits contribute to simple mounting **in that** the toe part and heel part of the sole can be bent apart during mounting on a foot.

8. A sole according to claims 4 to 6, **characterised in that** the sole's upper part further comprises a tightening mechanism for tightening the parts on each side of said slits towards each other such that the upper part surrounds the foot on which the sole is mounted, and further that pretensioning and stability between sole and foot increases.

9. A sole according to claim 7, **characterised in that** the tightening mechanism on the sole's upper part comprises an elongate belt shaped part which at one end thereof is fastened to a heel part of the sole, whilst at its other end it is passed through two flat-lying and basically circular locking rings which function as a lock for the belt-shaped part, and where the locking rings are attached to an upper and forward part of the upper part of the sole, and where one of the locking rings comprises a release cord at the end thereof that is closest to the attachment to said upper part of the sole, such that the lock is opened by pulling on the release cord.

10. A sole according to claim 1, **characterised in that** the underside of the sole is equipped with friction means.

11. A sole according to claim 1, **characterised in that** the sole at its toe part is equipped with at least ventilating holes, drainage holes or pores.

## Patentansprüche

1. Sohle für den Fuß eines Tieres, wobei die Sohle derart aufgebaut ist, dass sie während des Gebrauchs eine stabile und unveränderte Position zwischen dem Fuß und der Sohle unabhängig von der Oberfläche und unabhängig davon, ob der Fuß während des Auftretens belastet oder während des Abhebens entlastet wird, beibehält und wobei die Sohle weiterhin im Gebrauch eine natürliche und dynamische biomechanische anatomische Kammer bildet, die in selbst-einstellender Weise Reibkräfte aufnimmt, die zwischen der Sohle und dem Fuß auftreten, derart dass die Sohle als Energiesteuerung der auf sie wirkenden Kräfte fungiert, und wobei dies dadurch ermöglicht wird, dass die Sohle zuerst aus einem elastischen Material mit einer Oberfläche gefertigt ist, die an den Fußabdruck angepasst ist,
**dadurch gekennzeichnet, dass**
die Sohle eine Härte hat, die an die Last angepasst ist, die auf die Sohle während des Auftretens wirkt, und wobei die Härte derart ist, dass die Füße des Tieres teilweise in die obere Oberfläche der Sohle sowohl während des Auftretens als auch während des Abhebens einsinken, und wobei die Sohle zweitens in Bezug auf Ihre obere Oberfläche mit einer Kraft vorbelastet ist, die bewirkt, dass mindestens der Zehenteil und der Fersenteil nach oben und zueinander vorgespannt sind, dahingehend, dass die obere Oberfläche so gefertigt ist, dass ihre mechanischen Eigenschaften diesem Teil eine größere Kontraktionskraft als der Unterseite verleihen, wobei die Sohle hierdurch den Fuß auch dann eng umgibt, wenn er während des Abhebens entlastet wird, und wobei dies dazu beiträgt, die Reibkräfte zwischen dem Fuß und der Sohle jederzeit aufrecht zu erhalten.

2. Sohle nach Anspruch 1,
**dadurch gekennzeichnet, dass**
die Sohle aus einem elastischen Material gefertigt ist, welches so ist, dass es in verschiedenen Abschnitten unterschiedliche Dicken hat und wodurch ein Federeffekt erzeugt wird, welcher mindestens den Zehenteil und Fersenteil nach oben und zueinander hin zieht.

3. Sohle nach Anspruch 1,
**dadurch gekennzeichnet, dass**
die Sohle in einem Schichtaufbau mit mindestens zwei Schichten gefertigt ist.

4. Sohle nach Anspruch 1,
**dadurch gekennzeichnet, dass**
die Sohle weiter einen oberen Teil aufweist, und wobei diese zusammen einen Schuh bilden.

5. Sohle nach Anspruch 3,
**dadurch gekennzeichnet, dass**
die Sohle und deren oberer Teil einstückig aus einem elastischen Material geformt sind.

6. Sohle nach Anspruch 3,
**dadurch gekennzeichnet, dass**
die Sohle und ihr oberer Teil aus mindestens zwei verschiedenen Teilen aus unterschiedlichen Materialien gebildet sind.

7. Sohle nach Anspruch 4 oder 5,
**dadurch gekennzeichnet, dass**
der obere Teil der Sohle Schlitze in seinen jeweiligen Seiten aufweist, die sich von einer Oberkante des oberen Teils und im Wesentlichen vertikal nach unten zur oberen Oberfläche der Sohle erstrecken, und wobei die Schlitze zu einer einfachen Anbringung dahingehend beitragen, dass der Zehenteil und der Fersenteil der Sohle während der Anbringung an einem Fuß voneinander weg gebogen werden können.

8. Sohle nach den Ansprüchen 4 bis 6,
**dadurch gekennzeichnet, dass**
der obere Teil der Sohle weiter einen Verengungsmechanismus zur Verengung der Teile auf jeder Seite der Schlitze zueinander hin aufweist, derart, dass der obere Teil den Fuß, auf dem die Sohle angebracht ist umschließt, und dass weiter eine Vorspannung und Stabilität zwischen Sohle und Fuß erhöht werden.

9. Sohle nach Anspruch 7,
**dadurch gekennzeichnet, dass**
der Verengungsmechanismus auf dem oberen Teil der Sohle einen langgestreckten riemenförmigen Teil aufweist, der an einem Ende an einem Fersenteil der Sohle befestigt ist, während er an seinem anderen Ende durch zwei flach liegende und im Wesentlichen kreisförmige Verriegelungsringe läuft, die als Verriegelung für den riemenförmigen Teil wirken, und wobei die Verriegelungsringe an einem oberen und vorderen Teil des Oberteils der Sohle angebracht sind, wobei einer der Verriegelungsringe einen Freigabefaden an dem Ende aufweist, welches näher zur Anbringung des Oberteils der Sohle liegt, derart, dass die Verriegelung durch Ziehen an dem Freigabefaden geöffnet wird.

10. Sohle nach Anspruch 1,
**dadurch gekennzeichnet, dass**
die Unterseite der Sohle mit Reibmitteln versehen ist.

11. Sohle nach Anspruch 1,
**dadurch gekennzeichnet, dass**
die Sohle an ihrem Zehenteil mit mindestens Belüftungslöchern, Drainagelöchern oder Poren versehen ist.

## Revendications

1. Semelle pour le pied d'un animal, dans lequel la semelle est construite de sorte qu'en utilisation, elle maintienne une position stable et inchangée entre le pied et la semelle indépendamment de la surface et indépendamment du fait que le pied soit chargé pendant l'étape de descente ou déchargé pendant l'étape de montée, et dans laquelle en outre la semelle, en utilisation, forme une chambre anatomique biomécanique dynamique qui absorbe les forces de frottement qui apparaissent entre la semelle et le pied d'une façon auto-ajustable par rapport aux forces qui sont appliquées de sorte que la semelle fonctionne comme une régulation d'énergie des forces agissant sur celle-ci, et dans laquelle cela est rendu possible tout d'abord parce que la semelle est constituée d'un matériau élastique avec une surface qui est adaptée à l'empreinte du pied,
**caractérisée en ce que** la semelle a une dureté qui est adaptée à la charge à laquelle la semelle est soumise pendant l'étape de descente, et dans laquelle la dureté est telle que les pattes de l'animal s'enfoncent partiellement dans la surface supérieure de la semelle pendant à la fois l'étape de descente et l'étape de montée, et dans laquelle deuxièmement la semelle est sollicitée par rapport à sa surface supérieure avec une force qui provoque la sollicitation vers le haut et l'une vers l'autre d'au moins la partie de pince et la partie de talon, **en ce que** sa surface supérieure est réalisée de sorte que ses propriétés mécaniques donnent à cette partie davantage de force de contraction qu'à sa sous-face, la semelle entourant ainsi fermement le pied également lorsqu'il est déchargé pendant l'étape de montée, et dans lequel cela contribue au maintien des forces de frottement entre le pied et la semelle à tout moment.

2. Semelle selon la revendication 1, **caractérisée en ce que** la semelle est réalisée en un matériau élastique qui est réalisé avec différentes épaisseurs dans différentes portions et moyennant quoi un effet de ressort est généré, lequel tire au moins une partie de pince et une partie de talon vers le haut et l'une vers l'autre.

3. Semelle selon la revendication 1, **caractérisée en ce que** la semelle est réalisée en une construction en couches ayant au moins deux couches.

4. Semelle selon la revendication 1, **caractérisée en ce que** la semelle comprend en outre une partie supérieure, et où celles-ci forment ensemble un chaussant.

5. Semelle selon la revendication 3, **caractérisée en ce que** la semelle et sa partie supérieure sont moulées d'une seule pièce en un matériau élastique.

6. Semelle selon la revendication 3, **caractérisée en ce que** la semelle et sa partie supérieure sont constituées d'au moins deux parties différentes réalisées en différents matériaux.

7. Semelle selon la revendication 4 ou 5, **caractérisée en ce que** la partie supérieure de la semelle comprend des fentes dans ses côtés respectifs qui s'étendent à partir d'un bord supérieur de la partie supérieure et essentiellement verticalement vers le bas vers la surface de dessus de la semelle, et dans laquelle lesdites fentes contribuent à un montage simple **en ce que** la partie de pince et la partie de talon de la semelle peuvent être séparées par flexion pendant le montage sur un pied.

8. Semelle selon les revendications 4 à 6, **caractérisée en ce que** la partie supérieure de la semelle comprend en outre un mécanisme de serrage destiné à serrer les parties de chaque côté desdites fentes l'une vers l'autre de sorte que la partie supérieure entoure le pied sur lequel la semelle est montée, et en outre **en ce que** la précontrainte et la stabilité entre la semelle et le pied augmentent.

9. Semelle selon la revendication 7, **caractérisée en ce que** le mécanisme de serrage sur la partie supérieure de la semelle comprend une partie en forme de sangle allongée qui, au niveau d'une de ses extrémités, est arrimée à une partie de talon de la semelle, alors qu'au niveau de son autre extrémité, passe à travers deux anneaux de blocage essentiellement circulaires et reposant à plat qui fonctionnent comme un dispositif de blocage pour la partie en forme de sangle, et où les anneaux de blocage sont fixés à une partie supérieure et avant de la partie supérieure de la semelle, et où l'un des anneaux de blocage comprend un cordon de libération au niveau de son extrémité qui est le plus proche de l'arrimage à ladite partie supérieure de la semelle, de sorte que le dispositif de blocage soit ouvert en tirant sur le cordon de libération.

10. Semelle selon la revendication 1, **caractérisée en ce que** le dessous de la semelle est équipée d'un moyen de frottement.

11. Semelle selon la revendication 1, **caractérisée en ce que** la semelle, au niveau de sa partie de pince, est équipée par au moins des trous d'aération, des trous d'évacuation ou des pores.
